# EUROPÄISCHE PATENTANMELDUNG

(11) **EP 4 818 744 A1**
(43) Veröffentlichungstag der Anmeldung: **07.10.2026**
(21) Anmeldenummer: 25167869.4
(22) Anmeldetag: 01.04.2025
(51) Int. Cl.: G01S 7/48, G01S 7/4861, G01S 7/4865, G01S 7/487

(54) **SYSTEM UND VERFAHREN ZUM FILTERN VON SENSORDATEN**

(71) Anmelder: SICK AG, 79183 Waldkirch (DE)
(72) Erfinder: ZWÖLFER, Ulrich, 79183 Waldkirch (DE)
(74) Vertreter: Manitz Finsterwald Patent- und Rechtsanwaltspartnerschaft mbB

(57) **Zusammenfassung**

Ein System zum Filtern von Sensordaten umfasst einen Sensor, eine Datenverarbeitungseinheit und eine Auswerteeinheit. Der Sensor ist dazu ausgebildet, Sendesignale auszusenden und nach Reflexion oder Remission an einem Objekt Empfangssignale zu empfangen. Die Datenverarbeitungseinheit ist dazu ausgebildet, die Empfangssignale zu Sensordaten zu verarbeiten und die Sensordaten zu kumulieren. Die Auswerteeinheit ist dazu ausgebildet, zumindest ein lokales Maximum mittels eines analogen neuronalen Netzwerks basierend auf den kumulierten Sensordaten zu bestimmen.

## Beschreibung

Die Erfindung betrifft ein System und ein Verfahren zum Filtern von Sensordaten.

In der modernen Sensortechnologie kann die präzise Messung von Entfernungen und Bewegungen von Objekten von entscheidender Bedeutung sein. Herkömmliche Sensortechniken stoßen an ihre Grenzen, insbesondere bei der Verarbeitung großer Datenmengen, die durch Reflexion oder Remission von Signalen entstehen.

Ein bekanntes Verfahren zur Entfernungsmessung ist das Laufzeitprinzip, bei dem die Zeit gemessen wird, die ein ausgesendetes Signal benötigt, um von einem Objekt reflektiert zu werden und zurück zum Empfänger zu gelangen. Dabei ist es oft eine Herausforderung, die empfangenen Signale effizient zu verarbeiten und genaue Entfernungsdaten zu extrahieren, insbesondere in Umgebungen mit viel Hintergrundrauschen.

Es ist daher die Aufgabe der hier vorliegenden Erfindung, ein effizientes System und Verfahren zur Filterung von Sensordaten bereitzustellen.

Die Aufgabe wird durch ein System zum Filtern von Sensordaten und durch ein Verfahren zum Filtern von Sensordaten gelöst. Vorteilhafte Ausführungsformen des Systems und des Verfahrens sind in den Unteransprüchen, der Beschreibung und den Zeichnungen dargestellt.

Das erfindungsgemäße System dient zum Filtern von Sensordaten. Das System umfasst einen (optoelektronischen) Sensor, eine Datenverarbeitungseinheit und eine Auswerteeinheit. Der Sensor ist dazu ausgebildet, Sendesignale auszusenden und nach Reflexion oder Remission an einem Objekt Empfangssignale zu empfangen. Die Datenverarbeitungseinheit ist dazu ausgebildet, die Empfangssignale zu Sensordaten zu verarbeiten und die Sensordaten zu kumulieren. Die Auswerteeinheit ist dazu ausgebildet, zumindest ein lokales Maximum mittels eines analogen neuronalen Netzwerks basierend auf den kumulierten Sensordaten zu bestimmen.

Der Sensor kann ein LiDAR-Sensor sein. Ein LiDAR-Sensor kann Laserstrahlen aussenden, in anderen Worten: Lichtstrahlen, und die Zeit messen, die das Licht benötigt, um zu dem Sensor zurückzukehren. Die Verwendung eines LiDAR-Sensors kann eine präzise Entfernungsmessung von Objekten in der Umgebung des Sensors ermöglichen.

Der Sensor kann eine Vielzahl von Sendern und/oder Empfängern umfassen. Die Anzahl der Sender kann verschieden von der Anzahl der Empfänger sein.

Die Datenverarbeitungseinheit ist dazu ausgebildet, die Empfangssignale zu empfangen. Die Empfangssignale können mittels der Datenverarbeitungseinheit verstärkt werden, um auch schwächere Signale klarer erfassen zu können. Anschließend kann eine Rauschunterdrückung erfolgen, bei der störende Hintergrundgeräusche oder unerwünschte Signale herausgefiltert werden können, um die Genauigkeit der Sensordaten zu erhöhen.

Die Sensordaten können mittels der Datenverarbeitungseinheit über einen bestimmten Zeitraum gesammelt und zusammengefasst werden. Dies kann es ermöglichen, Muster, Trends oder Anomalien in den Sensordaten zu erkennen, indem sie in einer strukturierten Form gespeichert und analysiert werden können. Das Kumulieren kann dabei helfen, die Sensordaten zu glätten und einzelne Ausreißer zu minimieren, was zu einer genaueren und zuverlässigeren Analyse der Sensordaten führen kann. Das Erkennen von Mustern, Trends oder Anomalien, insbesondere von (lokalen) Maximalwerten in den Sensordaten kann als Filtern der Sensordaten bezeichnet werden.

Ein lokales Maximum kann einem Punkt der kumulierten Sensordaten entsprechen, der einen höheren oder größeren Wert im Vergleich zu den umgebenden Punkten der kumulierten Sensordaten aufweist. Dieser Punkt kann ein signifikantes oder auffälliges Merkmal, in anderen Worten: eine Anomalie, beschreiben und beispielsweise auf ein spezifisches Ereignis oder eine bestimmte Eigenschaft des Objekts hinweisen. So kann eine Identifizierung solcher lokaler Maxima verwendet werden, um relevante Informationen aus den Sensordaten zu extrahieren. Beispielsweise kann basierend auf der Ermittlung eines lokalen Maximums in den kumulierten Sensordaten eine Entfernung oder eine Distanz des Objekts zu dem Sensor ermittelt werden.

Ein analoges neuronales Netzwerk kann die Funktionsweise eines biologischen neuronalen Netzwerks nachahmen, jedoch in analoger Form. Das analoge neuronale Netzwerk kann eine Vielzahl von miteinander verbundenen Knoten, die als Neuronen fungieren, umfassen. Die Neuronen können Informationen verarbeiten, indem sie beispielsweise Sensordaten empfangen, gewichten und weiterleiten. Anders als digitale Netzwerke kann ein analoges neuronales Netzwerk kontinuierlich mit Spannungen oder Strömen arbeiten, was eine schnelle und energieeffiziente Verarbeitung der Sensordaten ermöglichen kann. Zudem können analoge neuronale Netzwerke besonders geeignet für Aufgaben sein, bei denen Mustererkennung und Entscheidungsfindung im Vordergrund stehen.

In einer Ausführungsform ist das analoge neuronale Netzwerk als Korrelationsfilter ausgebildet. Ein Korrelationsfilter, auch als Optimalfilter bezeichnet, kann geeignet sein, um ein Signal aus einem Hintergrundrauschen optimal herauszufiltern. Das analoge neuronale Netzwerk kann dazu ausgelegt sein, das zumindest eine lokale Maximum basierend auf kumulierten Sensordaten zu bestimmen, die Störsignale wie beispielsweise Fremdlicht umfassen. Das analoge neuronale Netzwerk kann hierzu die kumulierten Sensordaten mit bekannten Referenzdaten vergleichen und eine Übereinstimmung zwischen den Sensordaten und den Referenzdaten maximieren. Dies kann eine effiziente Erkennung von lokalen Maximalwerten in den Sensordaten ermöglichen, während unerwünschtes Rauschen reduziert werden kann. Das analoge neuronale Netzwerk kann effektiv zwischen relevanten Signaldaten und Rauschen differenzieren.

In einer Ausführungsform umfasst das analoge neuronale Netzwerk eine Vielzahl von Eingangsknoten und einen Summenknoten. Jeder Eingangsknoten der Vielzahl von Eingangsknoten kann dazu ausgebildet sein, die Sensordaten zu empfangen und an nachfolgende Schichten des analogen neuronalen Netzwerkes weiterzuleiten. Die Eingangsknoten können eine initiale Verarbeitung der Sensordaten starten und beispielsweise die Sensordaten in eine Form bringen, die für eine weitere Analyse in dem analogen Netzwerk geeignet ist. Beispielsweise können die Eingangsknoten die Sensordaten für die weitere Verarbeitung vorbereiten, indem sie sie in eine Form umwandeln, die für eine Anomalie-Erkennung und Analyse in dem analogen neuronalen Netzwerk geeignet ist. Die Umwandlung von digitalen Sensordaten oder -signalen in die von dem analogen neuronalen Netzwerk benötigten analogen Daten oder Signale kann vorzugsweise durch einen oder mehrere Digital-Analog-Wandler (digital analog converter, DAC) erfolgen. Der Summenknoten kann dazu ausgebildet sein, die Ausgaben der Vielzahl von Eingangsknoten zu sammeln. Insbesondere kann der Summenknoten auch dazu ausgebildet sein, die Ausgaben der Vielzahl von Eingangsknoten zu verarbeiten und an einen oder mehrere (Eingangs-)knoten nachfolgender Schichten des analogen neuronalen Netzwerkes weiterzuleiten. Es versteht sich, dass das analoge neuronale Netzwerk auch mehr als einen Summenknoten umfassen kann.

In einer Ausführungsform ist jeder Eingangsknoten der Vielzahl von Eingangsknoten dazu ausgebildet, die Sensordaten, die kumulierten Sensordaten oder einen Teil der kumulierten Sensordaten zu empfangen. Die Vielzahl der Eingangsknoten können als erste Schicht der Datenaufnahme in dem analogen neuronalen Netzwerk dienen, wo die Sensordaten oder kumulierten Sensordaten in das analoge neuronale Netzwerk eingespeist werden. Insbesondere kann jeder Eingangsknoten der Vielzahl von Eingangsknoten die Sensordaten oder die kumulierte Sensordaten eines Empfängers des Sensors empfangen.

In einer Ausführungsform ist der Summenknoten dazu ausgebildet, eine gewichtete Summation der über die Eingangsknoten empfangenen Sensordaten oder kumulierten Sensordaten durchzuführen, um das zumindest eine lokale Maximum zu bestimmen. Der Summenknoten kann die gewichtete Summation der Sensordaten oder der kumulierten Sensordaten durchführen, um ein kombiniertes Signal zu erzeugen. Dieses Signal kann eine Gesamtaktivierung repräsentieren und dabei helfen, Muster in den Sensordaten oder den kumulierten Sensordaten zu erkennen, indem das Signal die Beiträge aller Eingangsknoten zu einem einheitlichen Ergebnis zusammenfasst. Die Gesamtaktivierung kann widerspiegeln, wie stark die empfangenen kumulierten und evtl. gewichteten Sensordaten mit einem gesuchten Muster oder Signal übereinstimmen. Somit kann eine präzise Erkennung von Mustern, insbesondere eine Erkennung von lokalen Maximalwerten in den Sensordaten oder kumulierten Sensordaten ermöglicht werden.

Die Eingangsknoten und der Summenknoten des analogen neuronalen Netzwerks können beispielhaft in analoger Schaltungstechnik als Summierverstärker (in anderen Worten: Addierer oder Umkehraddierer) beschrieben werden. Der Summierverstärker kann einen Operationsverstärker und Widerstände umfassen. Der Summierverstärker kann die Funktion eines gewichteten Addierers übernehmen, wobei die Widerstände als Gewichte fungieren können, indem sie Eingangssignale (Empfangssignale) "abschwächen" und anschließend summieren. Eine Verstärkung der summierten Empfangssignale (Gesamtsignal) kann durch den Operationsverstärker und einem Rückkopplungswiderstand erfolgen, der zwischen einem Ausgang des Operationsverstärkers und einem negativen Eingang des Operationsverstärkers angeordnet ist.

Konkret können beispielsweise drei (oder mehr) Eingangswiderstände als Spannungsteiler wirken. Die drei Eingangswiderstände können ein Verhältnis bestimmen, mit dem jedes Empfangssignal (beispielsweise ein Sensorsignal) abgeschwächt und als Strom zu einem Summierpunkt geleitet wird. An dem Summierpunkt können die Ströme jedes Empfangssignals addiert werden. Der Rückkopplungswiderstand in Verbindung mit dem Operationsverstärker, kann den summierten Strom verstärken und eine Ausgangsspannung am Ausgang des Operationsverstärkers erzeugen. Die Ausgangsspannung kann proportional zu der Summe der gewichteten Empfangssignale sein.

Somit kann durch eine derartige Schaltung eine gewünschte Summierung und Verstärkung (oder Abschwächung) der Eingangssignale durch die Kombination von Spannungsteilern und dem Operationsverstärker mit Rückkopplungswiderstand erreicht werden.

In einer Ausführungsform ist die Datenverarbeitungseinheit dazu ausgebildet, die Sensordaten zu einem Histogramm zu kumulieren. Das Histogramm kann eine grafische Darstellung der Sensordaten sein. Das Histogramm kann aufzeigen, wie oft verschiedene Werte der Sensordaten innerhalb eines bestimmten Zeitintervalls oder Bereichs auftreten. Die Sensordaten können in Kategorien oder "Bins" eingeteilt werden, wobei jeder Bin einen bestimmten Wertebereich, z.B. ein Zeitbereich oder ein Entfernungsbereich, repräsentieren kann. Ein Bin kann ein diskretes Zeitintervall sein, das zur Messung der Laufzeit von Lichtimpulsen verwendet werden kann. Jeder Bin kann einem bestimmten Entfernungsbereich von dem Sensor zu einem Objekt entsprechen, da jeder Bin die Zeit repräsentieren kann, die das Licht benötigt, um von dem Sensor zu dem Objekt und zurück zu gelangen. Mittels des Histogramms können Muster oder Anomalien in den Sensordaten erkannt werden, indem das Histogramm eine Verteilung und Häufigkeit der erfassten Messwerte oder Sensordaten visualisieren kann.

In einer Ausführungsform wird das Histogramm durch Kumulieren der Sensordaten über einen vorbestimmten Zeitraum erzeugt, wobei das Histogramm eine Häufigkeitszählung basierend auf den Sensordaten innerhalb des vorbestimmten Zeitraums umfasst. Die Häufigkeitszählung kann angeben, wie oft bestimmte Werte der Sensordaten innerhalb eines vordefinierten Zeitrahmens oder Zeitintervalls auftreten. Jeder Bin in dem Histogramm kann für einen spezifischen Datenwertbereich stehen, z.B. eine Entfernung oder Distanz eines Objekts zu dem Sensor. Die Anzahl der in diesen Bereich fallenden Datenpunkte kann gezählt werden und so eine visuelle Darstellung der Datenverteilung erzeugt werden. Durch das Kumulieren der Sensordaten über einen festgelegten Zeitraum oder in bestimmten Zeitintervallen, kann eine verbesserte Datenanalyse ermöglicht werden. So können detaillierte Muster, beispielsweise lokale Maxima, in den Sensordaten erkannt werden.

In einer Ausführungsform wird das Histogramm durch das Aufteilen der Sensordaten in eine vorbestimmte Anzahl von Zeitintervallen erzeugt, wobei das Histogramm eine Häufigkeitszählung basierend auf den Sensordaten innerhalb des jeweiligen Zeitintervalls umfasst. Durch die Aufteilung oder Segmentierung der Sensordaten in spezifische Zeitintervalle kann das System zum Filtern von Sensordaten eine genauere Analyse der Sensordaten und somit eine präzisere Erkennung von Mustern oder Veränderungen über die Zeit hinweg ermöglichen.

In einer Ausführungsform umfasst die Datenverarbeitungseinheit die Auswerteeinheit. Dies kann bedeuten, dass Funktionen der Datenverarbeitungseinheit und der Auswerteeinheit, d.h. Arbeitsschritte die in der Datenverarbeitungseinheit und in der Auswerteeinheit ausgeführt werden, in einer gemeinsamen Einheit integriert sind, was die Effizienz der Signalverarbeitung erhöhen kann. Die Integration der Datenverarbeitungs- und Auswerteeinheit in einer einzigen Einheit kann zu einer schnelleren und energieeffizienteren Datenverarbeitung führen, da die Sensordaten nicht zwischen separaten Einheiten übertragen werden müssen.

In einer Ausführungsform sind die Datenverarbeitungseinheit und die Auswerteeinheit auf einem gemeinsamen Chip angeordnet. Dadurch kann eine kompakte und effiziente Schaltung ermöglicht werden, die die Systemgröße reduziert und die Leistung optimiert. Zudem kann die Chip-Integration zu einer höheren Zuverlässigkeit und einem geringeren Energieverbrauch bei der Auswertung der Sensordaten führen. Der Chip kann ein Time-of-Flight (ToF) Chip, insbesondere ein Direct Time-of-Flight (dToF) Chip sein.

In einer Ausführungsform weist der Chip eine flächenmäßige Größe zwischen 2 mm² und 5 mm², insbesondere 3 mm² auf.

In einer Ausführungsform umfasst der Sensor zumindest einen Lichtsender zum Aussenden von Lichtsendesignalen und zumindest einen Lichtempfänger zum Empfangen von Lichtempfangssignalen nach Reflexion oder Remission der Lichtsendesignale an dem Objekt. Genauer gesagt kann also das Licht der Lichtsendesignale von einem Objekt in der Umgebung des Sensors zum Sensor zurück reflektiert oder remittiert werden und dort als Lichtempfangssignal empfangen werden. Der Sensor kann zu einer Entfernungsmessung von einem Objekt zu dem Sensor geeignet sein. Der zumindest eine Lichtsender, zum Beispiel eine LED oder eine Laserlichtquelle, kann Lichtsendesignale in eine Umgebung um den Sensor aussenden. Befindet sich in der Umgebung des Sensors ein Objekt, so kann ein Teil des Lichts diffus remittiert oder reflektiert werden und als remittiertes Lichtsignal oder Lichtempfangssignal zu dem Sensor zurückgesendet werden, wo die Lichtempfangssignale von dem zumindest einen Lichtempfänger empfangen werden können.

Der zumindest eine Lichtempfänger kann eine Vielzahl von Pixelelementen umfassen, die jeweils als Single-Photon-Avalanche-Diode (SPAD), auch Geiger-Photodiode genannt, ausgebildet und vorzugsweise in einer Zeile oder Matrix angeordnet sind. Der Begriff Pixelelement kann sich auf einzelne Pixel und nicht auf Makropixel, die aus einer Gruppe von einzelnen Pixeln bestehen, beziehen.

In einer Ausführungsform ist die Datenverarbeitungseinheit dazu ausgebildet, eine Vielzahl von Laufzeiten zwischen einem Senden der Sendesignale und einem Empfangen der Empfangssignale zu bestimmen und eine Anzahl von Empfangssignalen für jede Laufzeit zu kumulieren. Die Datenverarbeitungseinheit kann dazu ausgebildet sein, SPAD-Signale auszuwerten und eine Entfernungsmessung basierend auf den SPAD-Signalen durchzuführen. Die Vielzahl von Laufzeiten kann in einem Histogramm mittels der Auswerteeinheit kumuliert und ausgewertet werden.

Die Datenverarbeitungseinheit kann eine Vielzahl von Laufzeitmesseinrichtungen umfassen, die mit Pixelelementen verbunden sind, um eine Laufzeit zwischen Senden und Empfangen eines Lichtsignals zu bestimmen. Die Laufzeitmesseinrichtungen können konfiguriert sein, die Vielzahl von Laufzeiten zu bestimmen. Die Laufzeitmesseinrichtungen können jeweils einen TDC (Time-to-Digital Converter) umfassen.

In einer Ausführungsform ist die Auswerteeinheit dazu ausgebildet, das zumindest eine lokale Maximum mittels des analogen neuronalen Netzwerks basierend auf der Anzahl von Empfangssignalen für jede Laufzeit zu bestimmen. Die Laufzeit kann einer Entfernung entsprechen. Das zumindest eine lokale Maximum kann auf eine häufige Reflexion der ausgesendeten Sendesignal oder Lichtsendesignale hinweisen. Das zumindest eine lokale Maximum oder allgemein ein Maximum in den kumulierten Sensordaten kann einen Zeitpunkt repräsentieren, an dem die Sendesignale das Objekt erreicht haben und zurück zu dem Sensor reflektiert wurden.

In einer Ausführungsform ist die Auswerteeinheit dazu ausgebildet, eine Entfernung zu dem Objekt mittels des analogen neuronalen Netzwerks basierend auf dem zumindest einen lokalen Maximum zu bestimmen. Durch die Kenntnis der Lichtgeschwindigkeit und der gemessene Zeit zwischen Aussendung und Rücckehr der Sensorsignale kann die Entfernung zu dem Objekte präzise ermittelt werden. Das analoge neuronale Netzwerk kann die Bestimmung der Entfernung verbessern, indem es die Maxima effizient und schnell identifizieren kann, was zu einer genaueren Distanzermittlung führen kann.

Ein weiterer Aspekt der Erfindung betrifft ein Verfahren zum Filtern von Sensordaten. Das Verfahren umfasst die folgenden Schritte: Empfangen, mittels eines Sensors, von Empfangssignalen nach Reflexion oder Remission an einem Objekt; Verarbeiten, mittels einer Datenverarbeitungseinheit, der Empfangssignale zu Sensordaten; Kumulieren, mittels der Datenverarbeitungseinheit, der Sensordaten; und Bestimmen, mittels einer Auswerteeinheit, von zumindest einem lokalen Maximum mittels eines analogen neuronalen Netzwerks basierend auf den kumulierten Sensordaten.

In einer Ausführungsform umfasst das Verfahren ferner die folgenden Schritte: Senden, mittels des Sensors, von Sendesignalen; Bestimmen einer Vielzahl von Laufzeiten zwischen einem Senden der Sendesignale und einem Empfangen der Empfangssignale; Kumulieren, mittels der Datenverarbeitungseinheit, einer Anzahl von Empfangssignalen für jede Laufzeit; Bestimmen, mittels der Auswerteeinheit, des zumindest einen lokalen Maximums mittels des analogen neuronalen Netzwerks basierend auf der Anzahl von Empfangssignalen für jede Laufzeit; und Bestimmen, mittels der Auswerteeinheit, einer Entfernung zu dem Objekt mittels des analogen neuronalen Netzwerks basierend auf dem zumindest einen lokalen Maximum.

Das Verfahren kann das Trainieren des analogen neuronalen Netzwerks umfassen, um zumindest ein lokales Maximum basierend auf kumulierten Sensordaten zu bestimmen. Insbesondere kann durch einen iterativen Anpassungsprozess, also das Training, die Verarbeitung der von dem analogen neuronalen Netzwerk empfangenen kumulierten Sensordaten so eingestellt werden, dass das analoge neuronale Netzwerk effektiv lernen kann, relevante Merkmale wie beispielsweise ein Maximum in den kumulierten Sensordaten zu erkennen und genaue Vorhersagen zu treffen. Ein Trainingsdatensatz zum Trainieren des analogen neuronalen Netzwerks kann Sensordaten die lokale Maxima aufweisen und entsprechende bekannte Ausgangsdaten, beispielsweise die bekannten lokalen Maxima der Sensordaten, umfassen.

Ein weiterer Aspekt der Erfindung betrifft ein Fahrzeug. Das Fahrzeug umfasst ein System zum Filtern von Sensordaten wie hierin beschrieben. Das Fahrzeug kann jede Art von Fahrzeug sein, beispielsweise ein autonom oder teil-autonom fahrendes Fahrzeug. Das Fahrzeug umfasst zumindest ein System zum Filtern von Sensordaten wie hierin beschrieben. Über den Sensor kann das Fahrzeug Informationen über die Umgebung des Fahrzeugs beziehen und daraus eine Entfernung zu möglichen Objekten in der Umgebung des Fahrzeugs mittels des Systems zum Filtern von Sensordaten ermitteln. Die mittels des Systems zum Filtern von Sensordaten ermittelten Entfernungen können für eine Steuerung des Fahrzeugs dienen, um beispielsweise kollisionsfrei von einem Startpunkt zu einem Zielpunkt navigieren zu können.

Nachfolgend wird die Erfindung rein beispielhaft unter Bezugnahme auf die Zeichnungen beschrieben. Es zeigen:
- Figur 1: eine schematische Darstellung eines erfindungsgemäßen Systems zum Filtern von Sensordaten gemäß einer Ausführungsform;
- Figur 2: eine beispielhafte Darstellung kumulierter Sensordaten in einem Histogramm;
- Figur 3: eine weitere beispielhafte Darstellung kumulierter Sensordaten in einem Histogramm;
- Figur 4: eine noch weitere beispielhafte Darstellung kumulierter Sensordaten in einem Histogramm;
- Figur 5: eine beispielhafte Prinzipdarstellung eines analogen neuronalen Netzwerks; und
- Figur 6: ein Flussdiagramm, welches ein Verfahren zum Filtern von Sensordaten gemäß einer Ausführungsform beschreibt.

In Sensorgeräten kann eine geringe Verlustleistung wichtig sein, besonders bei kleinen Bauformen. Traditionelle Batteriesysteme oder Systeme mit Harvesting-Verfahren zur Energiegewinnung reichen oft nicht aus, um eine lokale Datenverarbeitung durchzuführen, weshalb Sensordaten zur Auswertung häufig drahtlos an Rechenzentren gesendet werden. Mit Hilfe von analogen neuronalen Netzwerken kann jedoch eine lokale Datenauswertung direkt auf dem Chip ermöglicht werden, was Energie spart und die Datensicherheit erhöht.

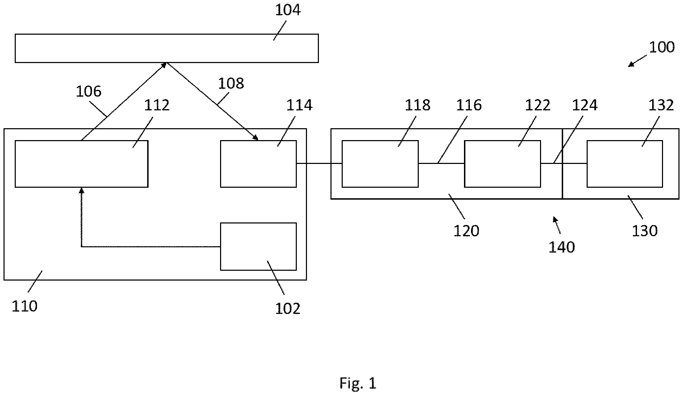

Fig. 1 zeigt eine schematische Darstellung eines Systems 100 zum Filtern von Sensordaten 116, insbesondere zur Distanzmessung zu einem Objekt 104 mithilfe eines Sensors 110. Das System 100 kann das Laufzeitprinzip (Time-of-Flight) verwenden, um eine Entfernung von dem Sensor 110 zu dem Objekt 104 zu bestimmen, indem die Zeit gemessen wird, die von einem Sender 112 des Sensors 110 ausgesendete Sendesignale 106 benötigen, um von dem Sensor 110 zu dem Objekt 104 und wieder zurück zu dem Sensor 110, insbesondere zu einem Empfänger 114 des Sensors 110 zu gelangen. Insbesondere kann mit einer Architektur und einem Aufbau wie in Fig. 1 dargestellt ein dToF (direct Time-of-Flight) messendes Konzept für eine Sensorik realisiert werden.

Eine Sensorsteuereinheit 102 steuert den Sensor 110. Der Sensor 110 kann ein LiDAR-Sensor sein und der Sender 112 kann als Laser ausgebildet sein. Der LiDAR-Sensor kann ein Geiger-mode LiDAR (GmLiDAR) sein, bei dem mit der Reflexion eines stärker divergenten Laserpulses eine Matrix von Einzelphoton-sensitiven Elementen (Geiger-mode Avalanche Photo Diode Array, GmAPD) beleuchtet wird. Der Sender 112 kann auch eine Leuchtdiode (LED) sein.

Der Sender 112 kann demnach ein Lichtsender sein, der ausgebildet ist, um Lichtsignale in Form von Lichtpulsen auszusenden. Der Sender 112 sendet die Lichtsignale in einen Bereich um den Sensor 110. Befindet sich in dem Bereich ein Objekt 104, so kann ein Teil der Lichtsignale von dem Objekt 104 diffus remittiert oder reflektiert werden und als Empfangssignal 108 zu dem Sensor 110 zurückgesendet werden. Die Empfangssingale können von dem Sensor 110, insbesondere von dem Empfänger 114 des Sensors 110 empfangen werden.

Der Empfänger 114 kann eine Vielzahl von Pixelelementen umfassen. Insbesondere kann der Empfänger 114 als "Single Photon Avalanche Diode" (SPAD) Empfänger ausgebildet sein und die von dem Objekt 104 reflektierten Lichtsignale empfangen. Der Empfänger 114 kann eine Matrix von Einzelphoton-sensitiven Elementen (Geiger-mode Avalanche Photo Diode Array, GmAPD) umfassen. Der Empfänger 114 kann demnach ein Lichtempfänger sein.

Der Empfänger 114 ist mit einer Datenverarbeitungseinheit 120 verbunden, in der die Empfangssignale 108 zu Sensordaten 116 verarbeitet werden können. Die Sensordaten 116 können mittels der Datenverarbeitungseinheit 120 kumuliert werden. Insbesondere kann die Datenverarbeitungseinheit 120 dazu ausgebildet sein, Signale der Pixelelemente des SPAD-Empfängers auszuwerten, um eine Laufzeit oder eine Vielzahl von Laufzeiten zwischen einem Senden der Sendesignale 106 und einem Empfangen der Empfangssignale 108 zu bestimmen. Die Laufzeit kann mit Hilfe der Lichtgeschwindigkeit in eine Entfernung umgerechnet werden.

Die Datenverarbeitungseinheit 120 kann einen "Time-to-Digital" (TDC) Konverter 118 umfassen. Der TDC-Konverter 118 kann die Laufzeit zwischen dem Senden eines Lichtsignals und dem Empfangen eines Lichtsignals messen. Insbesondere kann der TDC-Konverter 118 für jedes Sendesignal 106 und dem dazugehörigen Empfangssignal 108 eine Laufzeit zwischen dem Aussenden des Sendesignals 106 und dem Empfangen des Empfangssignals 108 bestimmen.

Die Datenverarbeitungseinheit 120 kann ferner eine Histogramm-Einheit 122 umfassen. Die Histogramm-Einheit 122 kann dazu ausgebildet sein, die von dem TDC-Konverter 118 empfangenen Sensordaten 116, insbesondere die Vielzahl von Laufzeiten, zu kumulieren. Die Histogramm-Einheit 122 kann die kumulierten Sensordaten 124 in einem Histogramm darstellen. Das Histogramm kann eine Verteilung der Laufzeiten beschreiben, wobei auf einer x-Achse des Histogramms (Zeit-)Bins und auf einer y-Achse des Histogramms eine Anzahl von Empfangssignalen 108 dargestellt sein kann, die eine Laufzeit innerhalb eines der Bins aufweisen.

Die Histogramm-Einheit 122 kann somit eine zeitliche Verteilung der zurückkehrenden Empfangssignale 108 erstellen. Bei einer ausreichend großen Anzahl von Empfangssignalen 108 kann das Histogramm einen deutliche Spitze, d.h. ein Maximum, anzeigen, aus dessen Position sich eine Gesamtlaufzeit und damit eine Entfernung zu dem Objekt 104 bestimmen lässt. Das Histogramm kann mehr als eine Spitze oder ein Maximum umfassen, zum Beispiel bei halbtransparenten Objekten, Glas oder Nebel.

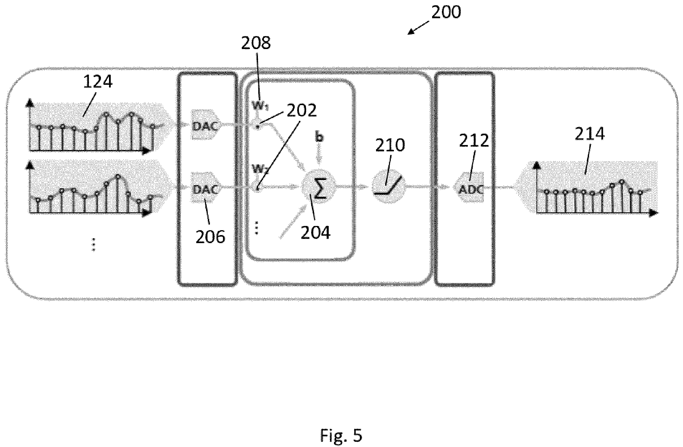

Die kumulierten Sensordaten 124 können von der Datenverarbeitungseinheit 120 an eine Auswerteeinheit 130 übergeben werden. Die Auswerteeinheit 130 kann einen Mikrocontroller 132 umfassen, der eine Auswertung der kumulierten Sensordaten 124 durchführen kann. Die Auswerteeinheit 130 ist dazu ausgebildet, zumindest ein lokales Maximum mittels eines analogen neuronalen Netzwerks 200 (siehe Fig. 5) basierend auf den kumulierten Sensordaten 124 zu bestimmen. Die Auswerteeinheit 130 ist insbesondere dazu ausgebildet, das zumindest eine lokale Maximum mittels des analogen neuronalen Netzwerks 200 zu bestimmen. Ferner kann die Auswerteeinheit 130 dazu ausgebildet sein, eine Entfernung zu dem Objekt 104 mittels des analogen neuronalen Netzwerks 200 basierend auf dem zumindest einen lokalen Maximum zu bestimmen.

Das analoge neuronale Netzwerk 200 kann trainiert werden, um zumindest ein lokales Maximum basierend auf den kumulierten Sensordaten 124 zu bestimmen. Insbesondere kann durch einen iterativen Anpassungsprozess die Verarbeitung der von dem analogen neuronalen Netzwerk 200 empfangenen kumulierten Sensordaten 124 so trainiert oder eingestellt werden, dass das analoge neuronale Netzwerk 200 effektiv lernen kann, relevante Merkmale wie beispielsweise ein Maximum in den kumulierten Sensordaten 124 zu erkennen und genaue Vorhersagen zu treffen. Ein Trainingsdatensatz zum Trainieren des analogen neuronalen Netzwerks 200 kann Sensordaten 124 die lokale Maxima aufweisen und entsprechende bekannte Ausgangsdaten, beispielsweise die bekannten lokalen Maxima der Sensordaten 124, umfassen.

Die Datenverarbeitungseinheit 120 kann die Auswerteeinheit 130 umfassen, sodass die Datenverarbeitungseinheit 120 und die Auswerteeinheit 130 eine gemeinsame Signalverarbeitungs- und Auswerteeinheit 140 bilden. Die Datenverarbeitungseinheit 120 und die Auswerteeinheit 130 können auf einem gemeinsamen Chip angeordnet sein. In anderen Worten, der Chip kann die Signalverarbeitungs- und Auswerteeinheit 140 umfassen. Der Chip kann eine flächenmäßige Größe zwischen 2 mm² und 5 mm², insbesondere 3 mm² aufweisen.

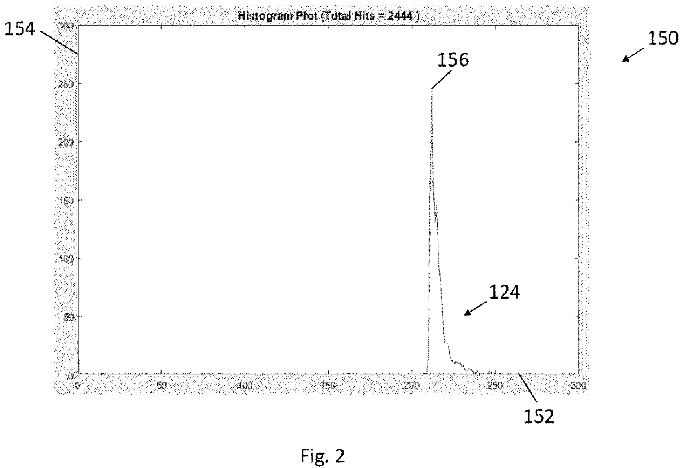

Figur 2 zeigt eine beispielhafte Darstellung kumulierter Sensordaten 124 in einem Histogramm 150. Das Histogramm 150 stellt eine Anzahl von "Treffern" in Bezug auf die Laufzeit von Lichtsignalen dar. Das Histogramm 150 stellt die Messung eines Einzeltargets oder eines einzigen erkannten Objekts 104 in der Umgebung des Sensors 110 ohne Einfluss von Fremdlicht dar. Die Gesamtzahl der Treffer bzw. der ausgewerteten Empfangssignale 108 beträgt 2444.

Auf der y-Achse 154 des Histogramms 150 wird die Anzahl der Treffer angezeigt, während die x-Achse 152 des Histogramms 150 die Laufzeiten der Lichtsignale in Bins darstellt, wobei ein Bin ein diskretes Zeitintervall repräsentieren kann. Die Anzahl der Treffer kann den Empfangssignalen 108 entsprechen, die von einem Objekt 104 reflektiert oder remittiert wurden. Insbesondere wird in dem Histogramm 150 die Anzahl der Empfangssignale 108 kumuliert für jede Laufzeit dargestellt.

Ein deutliches lokales Maximum 156 ist bei einem Wert von etwa "210" der Laufzeit auf der x-Achse 152 des Histogramms 150 zu erkennen, was auf eine signifikante Häufung von Treffern bei diesem Wert hinweist. In anderen Worten, es wurden ca. 250 Empfangssingale 108 (korrespondierender Wert auf der y-Achse 154 zu dem lokalen Maximum 156 bei einem Wert von ca. "210" auf der x-Achse 152 des Histogramms 150) mit einem Laufzeitwert von ca. "210" ausgewertet und kumuliert.

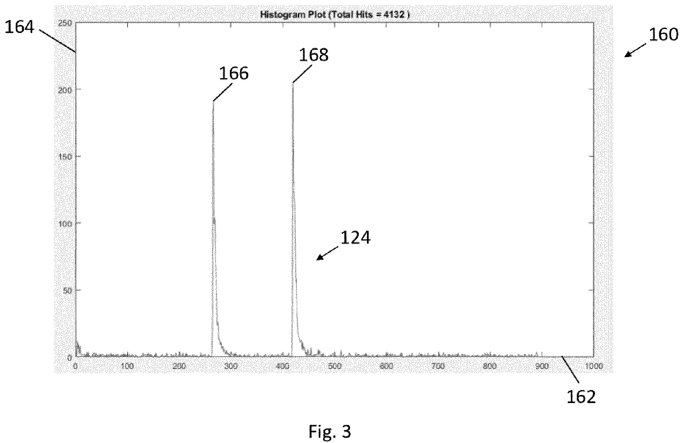

Figur 3 zeigt eine weitere beispielhafte Darstellung kumulierter Sensordaten 124 in einem Histogramm 160. Das Histogramm 160 stellt ebenfalls wie das Histogramm 150 aus Fig. 2 eine Anzahl von "Treffern" in Bezug auf die Laufzeit von Lichtsignalen ohne Fremdlichteinfluss dar. In dem Histogramm 160 ist jedoch kein Einzeltarget, sondern ein Doppeltarget dargestellt, beispielsweise von zwei Objekten 104 in der Umgebung des Sensors 110 mit unterschiedlicher Entfernung zu dem Sensor 110. Ein Doppeltarget kann auch durch ein einzelnes Objekt 104 auftreten, beispielsweise bei Reflexion der Lichtsignale an einer Glasscheibe oder bei Kantentreffern eines Objekts 104. Die Gesamtzahl der Treffer bzw. der ausgewerteten Empfangssignale 108 beträgt 4132.

Zwei lokale Maxima 166, 168 sind bei einem Wert von etwa "280" und "420" einer Laufzeit auf der x-Achse 162 des Histogramms 160 zu erkennen, was auf eine signifikante Häufung von Treffern bei diesen Werten hindeutet. In anderen Worten, es wurden ca. 190 Empfangssingale 108 (korrespondierender Wert auf der y-Achse 164 zu dem ersten lokalen Maximum 166 bei einem Wert von ca. "280" auf der x-Achse 162 des Histogramms 160) mit einem Laufzeitwert von ca. "280" ausgewertet und kumuliert und ca. 205 Empfangssingale 108 (korrespondierender Wert auf der y-Achse 164 zu dem zweiten lokalen Maximum 168 bei einem Wert von ca. "420" auf der x-Achse 162 des Histogramms 160) mit einem Laufzeitwert von ca. "420" ausgewertet und kumuliert.

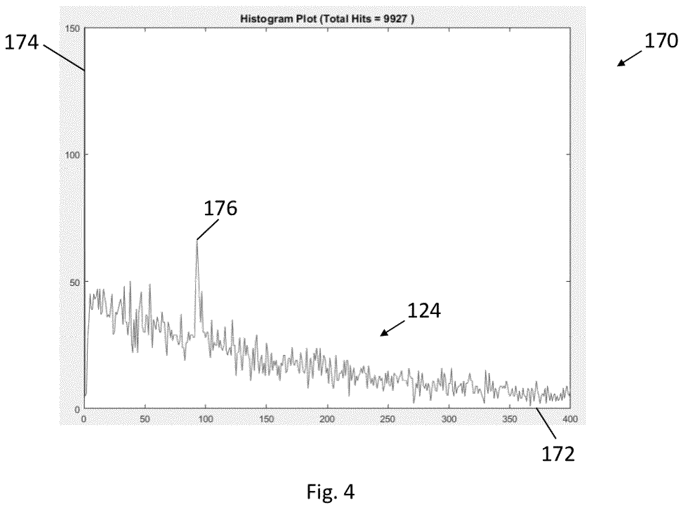

Figur 4 zeigt eine noch weitere beispielhafte Darstellung kumulierter Sensordaten 124 in einem Histogramm 170. Das Histogramm 170 stellt ebenfalls wie die Histogramme 150 und 160 in Figuren 3 und 4 eine Anzahl von "Treffern" in Bezug auf die Laufzeit von Lichtsignalen dar. Das Histogramm 170 zeigt die Messung eines Einzeltargets oder eines einzigen erkannten Objekts 104 in der Umgebung des Sensors 110 jedoch mit Einfluss von Fremdlicht. Die Gesamtzahl der Treffer bzw. der ausgewerteten Empfangssignale 108 beträgt 9927.

Ein lokales Maximum 176 ist bei einem Wert von etwa "95" einer Laufzeit auf der x-Achse 172 des Histogramms 170 zu erkennen, was auf eine signifikante Häufung von Treffern bei diesem Wert hinweist. **In** anderen Worten, es wurden ca. 65 Empfangssingale 108 (korrespondierender Wert auf der y-Achse 174 zu dem lokalen Maximum 176 bei einem Wert von ca. "95" auf der x-Achse 172 des Histogramms 170) mit einem Laufzeitwert von ca. "95" ausgewertet und kumuliert. Es wurden jedoch für jede Laufzeit, für jeden Wert auf der x-Achse 172 des Histogramms 170, Signale empfangen und ausgewertet. Dieses "Rauschen" kann durch Fremdlichteinfluss entstehen. Eine Auswertung der kumulierten Sensordaten 124 kann dadurch erschwert werden. Insbesondere kann die Ermittlung eines lokalen Maximums 176 erschwert werden.

Die Histogramme 150, 160, 170 in den Figuren 2 bis 4 stellen charakteristische Bildverläufe von verarbeiteten Sensordaten 116 dar, aus denen jeweils zumindest ein lokales Maximum 156, 166, 168, 176 und damit eine Entfernung zumindest eines Objekts 104 zu dem Sensor 110 mittels eines analogen neuronalen Netzwerks 200, wie nachfolgend beschrieben, bestimmt werden kann.

Figur 5 zeigt eine beispielhafte Prinzipdarstellung eines analogen neuronalen Netzwerks 200. Das analoge neuronale Netzwerk 200 kann eine Vielzahl von Eingangsknoten 202 und einen Summenknoten 204 umfassen. Jeder Eingangsknoten 202 kann dazu ausgebildet sein, die kumulierten Sensordaten 124 oder einen Teil der kumulierten Sensordaten 124 zu empfangen. Der Summenknoten 204 kann dazu ausgebildet sein, eine gewichtete Summation der über die Eingangsknoten 202 empfangenen kumulierten Sensordaten 124 durchzuführen, um das zumindest eine lokale Maximum 156, 166, 168, 176 (s. Figuren 2 bis 4) zu bestimmen.

Die kumulierten Sensordaten 124 können mittels eines Digital-Analog-Wandlers (DAC) 206 in analoge Signale umgewandelt werden. Die analogen Signale können von den Eingangsknoten 202 des analogen neuronalen Netzwerks 200 empfangen werden und mit spezifischen Gewichtungen 208 multipliziert werden. Die gewichteten analogen Signale an den Eingangsknoten 202 können an den Summenknoten 204 weitergeleitet werden und in dem Summenknoten 204 summiert werden.

Die Gewichtungen 208 können bestimmen, wie stark das Signal eines Eingangsknotens 202 ein Ausgangssignal 214 beeinflusst. Die Gewichtungen 208 können durch einen Lernprozess angepasst werden, um die Genauigkeit des analogen neuronalen Netzwerks 200 bei der Filterung von Sensordaten 116 oder bei der Erkennung von Mustern in den Sensordaten 116 zu verbessern.

Das summierte Signal wird durch eine Aktivierungsfunktion 210 geleitet, um eine nichtlineare Transformationen durchzuführen, bevor es mittels eines Analog-Digital-Wandlers (ADC) 212 in das digitales Ausgangssignal 214 umgewandelt wird. Die Aktivierungsfunktion 210 in dem analogen neuronalen Netzwerk 200 hat die Aufgabe, nichtlineare Transformationen auf das summierte Signal anzuwenden.

Die Aktivierungsfunktion 210 kann es dem analogen neuronalen Netzwerk 200 ermöglichen, komplexe Muster oder Anomalien in den Sensordaten 116 zu lernen und zu erkennen, was die Leistungsfähigkeit erheblich steigern kann. Es können verschiedene Aktivierungsfunktionen 210 wie beispielsweise Sigmoid, ReLU oder Tanh an unterschiedliche Aufgaben und Datenstrukturen angepasst werden. Zudem kann die Aktivierungsfunktion 210 Signale verstärken oder dämpfen, um relevante Merkmale hervorzuheben oder Rauschen zu reduzieren. Einige Aktivierungsfunktionen 210 können die Ausgabe auf einen bestimmten Bereich beschränken, was die Stabilität des Netzwerks verbessern kann.

Es versteht sich, dass das analoge neuronale Netzwerk 200 eine Vielzahl von Schichten umfassen kann, wobei jede Schicht mehrere Summenknoten 204 umfassen kann. Diese Schichten können es dem analogen neuronalen Netzwerk 200 ermöglichen, Informationen durch mehrere Verarbeitungsebenen zu transformieren, was die Fähigkeit zur Mustererkennung verbessern kann.

Die Schichten können eine Eingabeschicht, die die Sensordaten 116 aufnimmt und an das analoge neuronale Netzwerk 200 weiterleitet, verborgenen Schichten, die für die Hauptverarbeitung zuständig sind und komplexe Muster in den Sensordaten 116 erfassen kann, und eine Ausgabeschicht, die das Endergebnis des analogen neuronalen Netzwerks 200 liefert, umfassen. Mehrere Schichten können die Flexibilität und Anpassungsfähigkeit des analogen neuronalen Netzwerks 200 erhöhen, sodass es auf spezifische Aufgaben zugeschnitten werden kann. Zudem können mehrere Schichten die Lernfähigkeit des analogen neuronalen Netzwerks 200 verbessern und es ermöglichen, aus großen und komplexen Datensätzen zu lernen.

Das analoge neuronale Netzwerk 200 kann als Korrelationsfilter oder Optimalfilter ausgebildet sein. Mit Hilfe des Korrelationsfilter kann ein Signal-Rausch-Verhältnis (engl. signal to noise ratio, SNR) optimiert werden. Insbesondere kann ein lokales Maximum in den kumulierten Sensordaten 124 bestimmt werden, indem Ähnlichkeiten der Eingangsgrößen mit vordefinierten Mustern überprüft bzw. verglichen werden. Das analoge neuronale Netzwerk 200 kann somit zur optimalen Bestimmung des Vorhandenseins eines lokalen Maximums in Sensordaten in Gegenwart von Störungen, z.B. Störsignale, Rauschen, etc. dienen.

Im Rahmen eines Trainingsprozesses kann das analoge neuronale Netzwerk 200 eine Vielzahl von Iterationen durchlaufen, bei denen die Gewichtungen 208 schrittweise optimiert werden können. Typischerweise wird ein Backpropagation-Algorithmus eingesetzt, bei dem der Fehler zwischen der vorhergesagten und der tatsächlichen Ausgabe berechnet wird. Dieser Fehler wird dann rückwärts durch das Netzwerk propagiert, und die Gewichtungen 208 werden so angepasst, dass der Fehler minimiert wird.

Durch diesen iterativen Anpassungsprozess können die Gewichtungen 208 so eingestellt werden, dass das analoge neuronale Netzwerk 200 effektiv lernen kann, relevante Merkmale wie beispielsweise ein Maximum in den kumulierten Sensordaten 124 zu erkennen und genaue Vorhersagen zu treffen. Die Gewichtungen 208 können somit durch einen iterativen Lernprozess (in anderen Worten: durch eine "eingelernte" Programmierung) des analogen neuronalen Netzwerks 200 angepasst und durch (z.B. digital) angesteuerte Transistorschalter realisiert werden.

Ein Trainingsdatensatz zum Trainieren des analogen neuronalen Netzwerks 200 kann Eingangsdaten und entsprechende bekannte Ausgangsdaten umfassen. Die Eingangsdaten können eine Vielzahl von Histogrammen 150, 160, 170 mit kumulierten Sensordaten 124 umfassen, z. B. die Histogramme 150, 160, 170 wie in den Figuren 2 bis 4 dargestellt. Die Eingangsdaten können auch allgemein Sensordaten 116 umfassen, die lokale Maxima aufweisen. Die bekannten Ausgangsdaten können entsprechende bekannte lokale Maxima der Histogramme 150, 160, 170 oder der Sensordaten 116 sein. Es können verschiedene Musterszenarien für eine Anwendung des analogen neuronalen Netzwerks 200 zur Erkennung von lokalen Maxima (in anderen Worten: Peakextraktion aus Histogrammen) in Sensordaten verwendet bzw. eingelernt werden.

Das analoge neuronale Netzwerk 200 kann auf der Grundlage der Eingangsdaten ein Ergebnis erzeugen, das dann mit den bekannten Ausgangsdaten verglichen werden kann. Insbesondere können die in den Histogrammen 150, 160, 170 oder in den Sensordaten 116 bekannten lokalen Maxima 156, 166, 168, 176 in den Ausgangsdaten mit durch das analoge neuronale Netzwerk 200 bestimmten lokalen Maxima basierend auf den Eingangsdaten, verglichen werden. Auf der Grundlage des Ergebnisses können die Parameter, d.h. die Gewichtungen 208 des analogen neuronalen Netzwerks 200 angepasst werden.

Das analoge neuronale Netzwerk 200 wird derartig trainiert oder "gelernt", dass mittels des analogen neuronalen Netzwerks 200 schnell, mit geringsten Komplexitäten und bezahlbaren Technologieknoten die lokalen Maxima aus den Sensordaten extrahiert werden können, welche die gesuchten Entfernungswerte repräsentieren. Zudem können mit dem Einsatz des analogen neuronalen Netzwerks 200 Verlustleistungen und Latenzzeiten verringert werden.

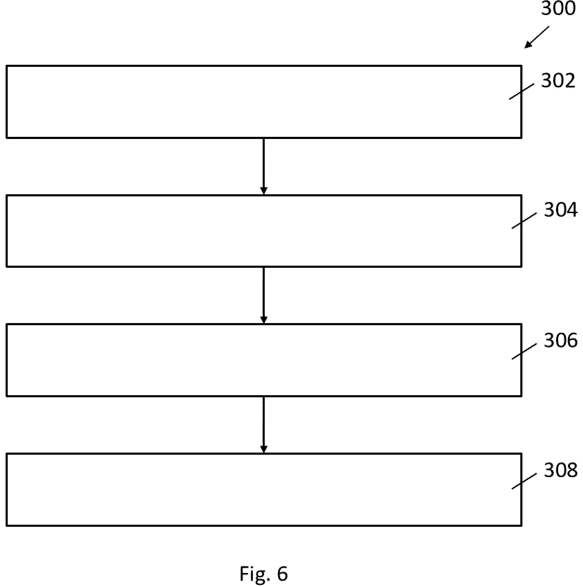

Figur 6 zeigt ein Flussdiagramm 300, welches ein Verfahren zum Filtern von Sensordaten gemäß einer Ausführungsform beschreibt. In Schritt 302 können Empfangssignale mittels eines Sensors nach Reflexion oder Remission an einem Objekt empfangen werden. In Schritt 304 können die Empfangssignale mittels einer Datenverarbeitungseinheit zu Sensordaten verarbeitet werden. In Schritt 306 können die Sensordaten mittels der Datenverarbeitungseinheit kumuliert werden. In Schritt 308 kann mittels einer Auswerteeinheit zumindest ein lokales Maximum mittels eines analogen neuronalen Netzwerks basierend auf den kumulierten Sensordaten bestimmt werden.

Gemäß einem Ausführungsbeispiel können Sendesignale mittels des Sensors gesendet werden.

Gemäß einem Ausführungsbeispiel kann mittels der Datenverarbeitungseinheit eine Vielzahl von Laufzeiten zwischen einem Senden der Sendesignale und einem Empfangen der Empfangssignale bestimmt werden.

Gemäß einem Ausführungsbeispiel kann mittels der Datenverarbeitungseinheit eine Anzahl von Empfangssignalen für jede Laufzeit kumuliert werden.

Gemäß einem Ausführungsbeispiel kann mittels der Auswerteeinheit das zumindest eine lokale Maximum mittels des analogen neuronalen Netzwerks basierend auf der Anzahl von Empfangssignalen für jede Laufzeit bestimmt werden. Gemäß einem Ausführungsbeispiel kann mittels der Auswerteeinheit eine Entfernung zu dem Objekt mittels des analogen neuronalen Netzwerks basierend auf dem zumindest einen lokalen Maximum bestimmt werden.

Jeder der Schritte 302, 304, 306, 308 und die weiteren oben beschriebenen Schritte können von dem hierin beschriebenen System zum Filtern von Sensordaten ausgeführt werden.

Ein System und ein Verfahren zum Filtern von Sensordaten wie hierin beschrieben ist insbesondere zur effizienten Auswertung von Histogrammen in Auffindung von relevanten Informationen für die optische Distanzmessung geeignet. Das hierin beschriebene System und Verfahren zum Filtern von Sensordaten ist insbesondere für die Realisierung einer anwendungsspezifische integrierte Schaltung (ASIC) für Industrieanwendungen zur Distanzmessung mit typischen Technologieknoten von 100nm bis 350nm geeignet. Insbesondere kann eine Integration des hierin beschriebenen Systems zum Filtern von Sensordaten bei geringem flächenmäßige Aufwand von ca. 3mm² für einen Chip und ca. 180nm Technologieknoten bei < 500 µs 10-facher Beschleunigung umgesetzt werden, wobei ein Technologieknoten ein erreichbares Miniaturisierungsniveau definiert (kleinste Strukturgröße).

### Bezugszeichenliste

- 100: System zum Filtern von Sensordaten
- 102: Sensorsteuereinheit
- 104: Objekt
- 106: Sendesignal
- 108: Empfangssignal
- 110: Sensor
- 112: Sender
- 114: Empfänger
- 116: Sensordaten
- 118: TDC-Konverter
- 120: Datenverarbeitungseinheit
- 122: Histogramm-Einheit
- 124: kumulierte Sensordaten
- 130: Auswerteeinheit
- 132: Mikrocontroller
- 140: Signalverarbeitungs- und Auswerteeinheit

- 150: Histogramm
- 152: x-Achse
- 154: y-Achse
- 156: Maximum

- 160: Histogramm
- 162: x-Achse
- 164: y-Achse
- 166: Maximum
- 168: Maximum
- 170: Histogramm
- 172: x-Achse
- 174: y-Achse
- 176: Maximum

- 200: analoges neuronales Netzwerk
- 202: Eingangsknoten
- 204: Summenknoten
- 206: Digital-Analog-Wandler
- 208: Gewichtungen
- 210: Aktivierungsfunktion
- 212: Analog-Digital-Wandler
- 214: Ausgangssignal

- 300: Flussdiagramm eines Verfahrens zum Filtern von Sensordaten
- 302: Schritt zum Empfangen von Empfangssignalen
- 304: Schritt zum Verarbeiten der Empfangssignale zu Sensordaten
- 306: Schritt zum Kumulieren der Sensordaten
- 308: Schritt zum Bestimmen von zumindest einem lokalen Maximum mittels eines analogen neuronalen Netzwerks

## Patentansprüche

1. System (100) zum Filtern von Sensordaten (116), umfassend
einen Sensor (110), dazu ausgebildet, Sendesignale (106) auszusenden und nach Reflexion oder Remission an einem Objekt (104) Empfangssignale (108) zu empfangen;
eine Datenverarbeitungseinheit (120), dazu ausgebildet, die Empfangssignale (108) zu Sensordaten (116) zu verarbeiten und die Sensordaten (116) zu kumulieren, und
eine Auswerteeinheit (130), dazu ausgebildet, zumindest ein lokales Maximum (156, 166, 168, 176) mittels eines analogen neuronalen Netzwerks (200) basierend auf den kumulierten Sensordaten (124) zu bestimmen.

2. System (100) nach Anspruch 1,
wobei das analoge neuronale Netzwerk (200) als Korrelationsfilter ausgebildet ist.

3. System (100) nach Anspruch 1 oder 2,
wobei das analoge neuronale Netzwerk (200) eine Vielzahl von Eingangsknoten (202) und einen Summenknoten (204) umfasst.

4. System (100) nach Anspruch 3,
wobei jeder Eingangsknoten (202) der Vielzahl von Eingangsknoten (202) dazu ausgebildet ist, die kumulierten Sensordaten (124) oder einen Teil der kumulierten Sensordaten (124) zu empfangen, und
wobei der Summenknoten (204) dazu ausgebildet ist, eine gewichtete Summation der über die Eingangsknoten (202) empfangenen kumulierten Sensordaten (124) durchzuführen, um das zumindest eine lokale Maximum (156, 166, 168, 176) zu bestimmen.

5. System (100) nach zumindest einem der Ansprüche 1 bis 4,
wobei die Datenverarbeitungseinheit (120) dazu ausgebildet ist, die Sensordaten (116) zu einem Histogramm (150, 160, 170) zu kumulieren.

6. System (100) nach Anspruch 5,
wobei das Histogramm (150, 160, 170) durch Kumulieren der Sensordaten (116) über einen vorbestimmten Zeitraum erzeugt wird, und/oder wobei das Histogramm (150, 160, 170) durch das Aufteilen der Sensordaten (116) in eine vorbestimmte Anzahl von Zeitintervallen erzeugt wird, und wobei das Histogramm (150, 160, 170) eine Häufigkeitszählung basierend auf den Sensordaten (116) innerhalb des vorbestimmten Zeitraums und/oder innerhalb des jeweiligen Zeitintervalls umfasst.

7. System (100) nach zumindest einem der Ansprüche 1 bis 6,
wobei die Datenverarbeitungseinheit (120) die Auswerteeinheit (130) umfasst.

8. System (100) nach zumindest einem der Ansprüche 1 bis 7,
wobei die Datenverarbeitungseinheit (120) und die Auswerteeinheit (130) auf einem gemeinsamen Chip angeordnet sind.

9. System (100) nach Anspruch 8,
wobei der Chip eine flächenmäßige Größe zwischen 2 mm² und 5 mm², insbesondere 3 mm² aufweist.

10. System (100) nach zumindest einem der Ansprüche 1 bis 9,
wobei der Sensor (110) zumindest einen Lichtsender zum Aussenden von Lichtsendesignalen und zumindest einen Lichtempfänger zum Empfangen von Lichtempfangssignalen nach Reflexion oder Remission der Lichtsendesignale an dem Objekt (104) umfasst.

11. System (100) nach zumindest einem der Ansprüche 1 bis 10,
wobei die Datenverarbeitungseinheit (120) dazu ausgebildet ist, eine Vielzahl von Laufzeiten zwischen einem Senden der Sendesignale (106) und einem Empfangen der Empfangssignale (108) zu bestimmen und eine Anzahl von Empfangssignalen (108) für jede Laufzeit zu kumulieren, und wobei die Auswerteeinheit (130) dazu ausgebildet ist, das zumindest eine lokale Maximum (156, 166, 168, 176) mittels des analogen neuronalen Netzwerks (200) basierend auf der Anzahl von Empfangssignalen (108) für jede Laufzeit zu bestimmen.

12. System (100) nach zumindest einem der Ansprüche 1 bis 11,
wobei die Auswerteeinheit (130) dazu ausgebildet ist, eine Entfernung zu dem Objekt (104) mittels des analogen neuronalen Netzwerks (200) basierend auf dem zumindest einen lokalen Maximum (156, 166, 168, 176) zu bestimmen.

13. Verfahren zum Filtern von Sensordaten (116), umfassend:
Empfangen (302), mittels eines Sensors (110), von Empfangssignalen (108) nach Reflexion oder Remission an einem Objekt (104);
Verarbeiten (304), mittels einer Datenverarbeitungseinheit (120), der Empfangssignale (108) zu Sensordaten (116);
Kumulieren (306), mittels der Datenverarbeitungseinheit (120), der Sensordaten (116); und
Bestimmen (308), mittels einer Auswerteeinheit (130), von zumindest einem lokalen Maximum (156, 166, 168, 176) mittels eines analogen neuronalen Netzwerks (200) basierend auf den kumulierten Sensordaten (124).

14. Verfahren nach Anspruch 13, ferner umfassend:
Senden, mittels des Sensors (110), von Sendesignalen (106);
Bestimmen, mittels der Datenverarbeitungseinheit (120), einer Vielzahl von Laufzeiten zwischen einem Senden der Sendesignale (106) und einem Empfangen der Empfangssignale (108);
Kumulieren, mittels der Datenverarbeitungseinheit (120), einer Anzahl von Empfangssignalen (108) für jede Laufzeit;
Bestimmen, mittels der Auswerteeinheit (130), des zumindest einen lokalen Maximums (156, 166, 168, 176) mittels des analogen neuronalen Netzwerks (200) basierend auf der Anzahl von Empfangssignalen (108) für jede Laufzeit; und
Bestimmen, mittels der Auswerteeinheit (130), einer Entfernung zu dem Objekt (104) mittels des analogen neuronalen Netzwerks (200) basierend auf dem zumindest einen lokalen Maximum (156, 166, 168, 176).

15. Fahrzeug, umfassend ein System (100) zum Filtern von Sensordaten (116) gemäß einem der Ansprüche 1 bis 12.
